Europäisches Patentamt

European Patent Office

Office européen des brevets

(19)

(11) Numéro de publication : **0 190 962**
**B1**

# (12) FASCICULE DE BREVET EUROPÉEN

(45) Date de publication du fascicule du brevet :
26.04.89

(21) Numéro de dépôt : 86400126.8

(22) Date de dépôt : 22.01.86

(51) Int. Cl.⁴ : **G 02 B  6/28**

(54) **Dispositif de couplage à fibres optiques et procédé de réalisation de ce dispositif.**

(30) Priorité : 22.01.85 FR 8500855

(43) Date de publication de la demande :
13.08.86 Bulletin 86/33

(45) Mention de la délivrance du brevet :
26.04.89 Bulletin 89/17

(84) Etats contractants désignés :
DE GB IT NL SE

(56) Documents cités :
EP—A— 0 038 023
EP—A— 0 103 467
EP—A— 0 121 460
FR—A— 2 565 581
US—A— 4 469 941

(73) Titulaire : **ETAT FRANCAIS représenté par le Ministre des PTT (Centre National d'Etudes des Télécommunications)**
**38-40 rue du Général Leclerc**
**F-92131 Issy-les-Moulineaux (FR)**

(72) Inventeur : **Boscher, Daniel**
**Résidence Les Huniers**
**F-22700 Perros Guirec (FR)**
Inventeur : **Landouar, Jean-Michel**
**Roscoualch Tredez Locquemeau**
**F-22300 Lannion (FR)**
Inventeur : **Morin, Marie**
**Place du Marchallach**
**F-22300 Lannion (FR)**

(74) Mandataire : **Fort, Jacques et al**
**CABINET PLASSERAUD 84, rue d'Amsterdam**
**F-75009 Paris (FR)**

## Description

L'invention a pour objet un dispositif de couplage à fibres optiques, notamment pour constituer des systèmes de transmission sur fibres optiques. Elle est en particulier utilisable dans les réseaux de télédistribution à fibres optiques, tels que les réseaux de vidéocommunication. Elle concerne également un procédé pour réaliser un tel dispositif.

On connaît déjà de nombreux procédés permettant de coupler une fibre à plusieurs fibres optiques.

On a notamment réalisé des coupleurs en torsadant des fibres, puis en les étirant pour provoquer leur fusion. On a également utilisé des optiques intégrées, en verre ou en matériau plastique transparent, des barreaux mélangeurs de couplage et des faisceaux optiques. Mais ces solutions sont difficiles à industrialiser ou sont peu satisfaisantes du point de vue des caractéristiques de transmission, les pertes d'insertion étant excessives ou la régularité de répartition étant difficile à obtenir.

Le document EP-A 121 460 décrit une pièce monobloc de réception permettant de réaliser un dispositif de couplage « 2 vers 1 », comportant une rainure convexe de réception de fibre ménagée dans une première face de la pièce, dans un premier plan de symétrie, une surface de référence dressée parallèle au premier plan de symétrie et une seconde surface de référence perpendiculaire au premier plan de symétrie et à un second plan de symétrie orthogonal au premier, située à proximité de la rainure. Une telle pièce, lorsqu'elle comporte une seule rainure, permet de réaliser un dispositif de couplage en la séparant en deux moitiés qui sont ensuite mises en vis-à-vis. L'ensemble des deux moitiés présente une face frontale à laquelle peut être adjoint un dispositif de centrage recevant un embout de connecteur. On réalise ainsi un coupleur à deux branches dans lequel l'équilibrage entre les deux entrées peut être très satisfaisant et dont le coût est cependant faible.

L'invention vise à fournir un dispositif permettant de coupler jusqu'à $2^n$ entrées à une sortie en mettant en œuvre une pièce de réception qui peut être du genre défini dans le document EP-A-121 460, mais avec plusieurs rainures, et cela de façon simple, avec des pertes de couplage acceptables et un équilibrage satisfaisant des entrées.

Pour cela, l'invention propose un dispositif de couplage à $2^n$ vers 1, comprenant les deux moitiés d'une pièce monobloc coupée en deux, ladite pièce étant munie de $2^n$-1 rainures convexes, identiques et parallèles réparties symétriquement par rapport à la rainure centrale dans lesquelles sont disposés des tronçons de fibre optique, la pièce monobloc étant ensuite arasée suivant un plan perpendiculaire à celui de la découpe en deux moitiés pour laisser subsister la moitié seulement de la section droite de fibre dans le plan de découpe de la pièce en deux moitiés, lesdites deux moitiés étant mises en contact suivant le plan d'arasement, les faces de découpage formant une face frontale et réalisant ainsi une restitution par apairage desdites moitiés des sections droites des fibres, et comprenant de plus une pièce auxiliaire à $2^n$-1 rainures placée contre la face frontale des deux moitiés, lesdits tronçons étant rebouclés par engagement dans les rainures de la pièce auxiliaire vers la face frontale des moitiés de façon que le bout de chaque tronçon rebouclé soit aligné respectivement sur une desdites restitutions desdites moitiés des fibres afin de constituer $2^n$-1 couplages élémentaires 2 vers 1.

L'invention propose également un procédé de réalisation d'un dispositif de couplage optique conforme à la revendication 3.

L'invention sera mieux comprise à la lecture de la description qui suit d'un mode particulier d'exécution, donné à titre d'exemple non limitatif, mettant en œuvre une pièce de base du genre décrit dans le document EP-A-121 460. La description se réfère aux dessins qui l'accompagnent, dans lesquels :

— la Figure 1 est un schéma de principe montrant la constitution d'un coupleur à $2^n$ entrées vers une sortie par mise en cascade de $2^n$-1 coupleurs élémentaires ;

— la Figure 2 est une vue en perspective de la pièce de base servant à réaliser le dispositif de couplage, l'échelle n'étant pas respectée pour plus de clarté ;

— les Figures 3A-3D sont des schémas montrant des étapes successives de réalisation du dispositif de couplage ;

— la Figure 4 est un schéma en perspective montrant la mise en place des tronçons de fibre dans la pièce auxiliaire, les tronçons n'étant pas tous représentés ;

— la Figure 5 est une vue en coupe transversale de la pièce auxiliaire, montrant une disposition possible des tronçons de fibre dans les rainures de cette pièce ;

— la Figure 6 est un schéma en élévation montrant le dispositif de couplage dans un boîtier dont le couvercle est enlevé ;

— la Figure 7 est une vue en coupe suivant la ligne VII-VII de la Figure 6.

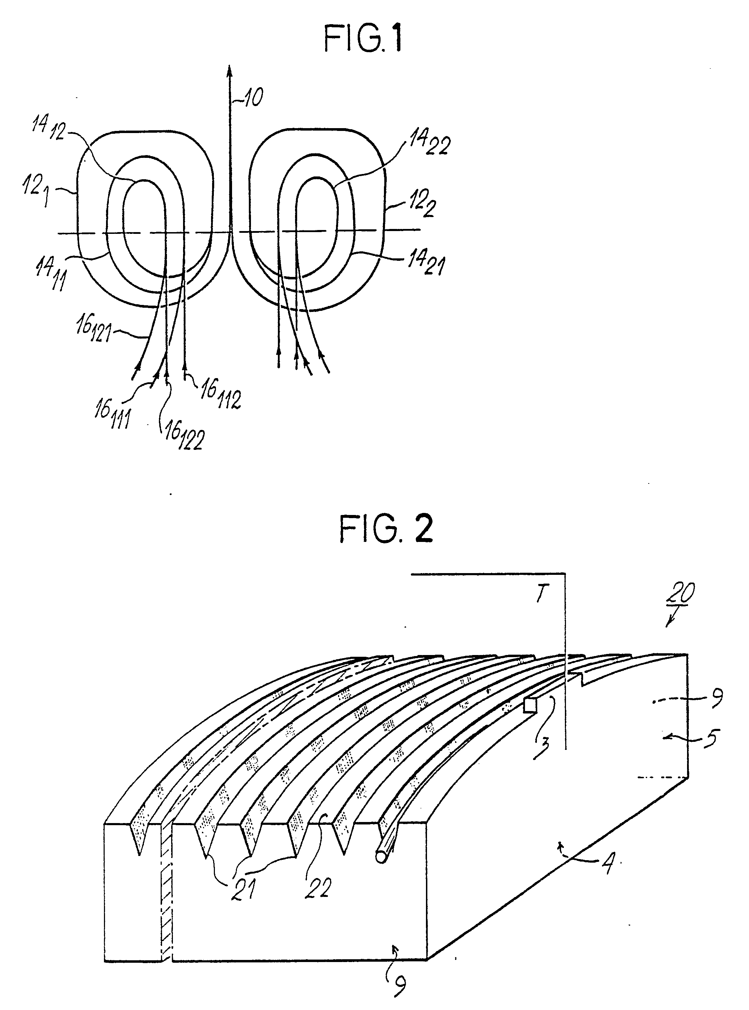

Avant de décrire la constitution matérielle et le procédé de réalisation d'un dispositif de couplage suivant l'invention, il peut être utile de faire apparaître le mode d'association en cascade de plusieurs couplages 2 vers 1. La Figure 1 montre cette disposition en cascade dans le cas d'un coupleur « 8 vers 1 », c'est-à-dire pour lequel $n = 3$. Le dispositif de couplage comporte un tronçon de fibre amorce 10 placé dans son plan médian et constituant la sortie unique du dispositif. Cette fibre amorce 10 est couplée à deux tronçons $12_1$ et $12_2$ rebouclés chacun sur une face frontale où, à leur tour, ils sont couplés, respectivement à des tronçons $14_{11}$ et $14_{12}$ d'une

part, $14_{21}$ et $14_{22}$ d'autre part. Enfin, chacun des tronçons 14 est rebouclé et couplé à deux tronçons qui constituent deux entrées, $16_{121}$ et $16_{122}$ dans le cas du tronçon $14_{12}$.

Le dispositif de couplage dont le schéma a été montré en Figure 1 est réalisable à partir d'une pièce de base 20 pouvant être du même genre que celles décrites dans les documents EP-A-121 460 et FR 84 09085 mais avec $2^n$-1 rainures parallèles équidistantes 21 (n étant égal à 3 si l'on souhaite réaliser un coupleur du genre schématisé en Figure 1).

La Figure 2 montre une pièce de base 20 qui présente un plan de symétrie longitudinal (suivant la grande dimension de la pièce) et un plan de symétrie transversal, orthogonal au précédent. Une première face 22 de la pièce 20, symétrique par rapport aux deux plans, est de forme convexe. Dans cette face de travail 22 sont ménagées $2^n$-1 rainures en V 21. La rainure médiane 21 est placée dans le plan de symétrie longitudinal. Les autres rainures sont placées symétriquement par rapport à la rainure médiane. Toutes les rainures ont la même courbure. Dans la zone proche du plan de symétrie transversal, le rayon de courbure est choisi en fonction des caractéristiques de la fibre à coupler et des conditions d'injection. L'emplacement des rainures 21 doit être défini avec précision par rapport à plusieurs surfaces de référence prévues sur la pièce.

Une première surface de référence 3, dont le rôle est essentiel, est perpendiculaire aux deux plans de symétrie et elle est située à proximité de la zone centrale des rainures. Elle est avantageusement ménagée sur un tenon venant de moulage avec la pièce. Une seconde surface plane de référence 4, à l'opposé de la face de travail 22, constitue le fond de la pièce. Une surface plane latérale 5 est parallèle au plan longitudinal de symétrie et elle se trouve à distance connue de ce dernier. Enfin, les surfaces terminales 9 de la pièce permettent de définir le plan de symétrie transversal.

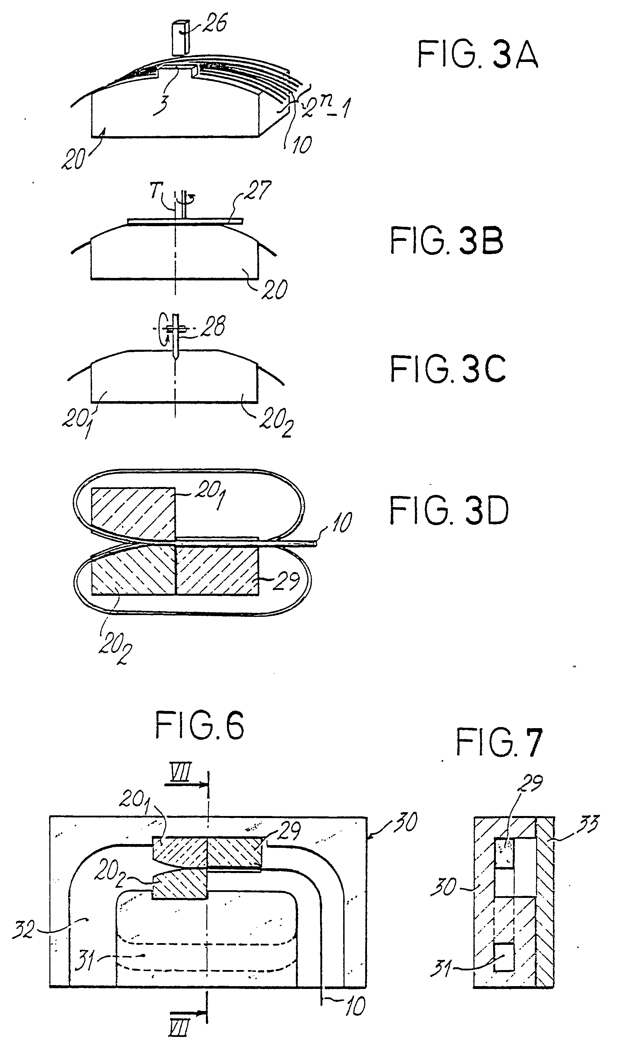

La séquence des opérations à réaliser pour constituer un dispositif de couplage en utilisant une pièce de base du genre montré en Figure 2 apparaît sur les schémas des Figures 3A à 3D.

La première opération à réaliser consiste à encoller un tronçon de fibre dans chaque rainure. Les fibres sont avantageusement encollées à l'aide de la même résine que celle qui a servi à la fabrication de la pièce 20.

La pièce munie de ses fibres (Figure 3A) est ensuite arasée jusqu'à un plan longitudinal situé à une cote prédéterminée par rapport à la surface de référence 3 (Figure 3B). La profondeur d'arasement doit être telle que la section droite des fibres soit réduite, dans le plan transversal de symétrie T, à la moitié de sa valeur d'origine. Les écarts de profondeur entre les rainures introduisent une dispersion dans la profondeur d'attaque des fibres. La dispersion ne devant pas dépasser quelques microns, le moule de fabrication de la pièce 20 devra être conçu pour que la tolérance sur les profondeurs de rainure ne dépasse pas cette valeur. On verra en effet que la dispersion dans la profondeur d'attaque introduit un écart du second ordre sur les caractéristiques optiques du dispositif de couplage.

L'abrasion peut être effectuée sans difficulté à l'aide d'un disque 27 tournant à grande vitesse, une touche 26 en appui sur la surface 3 permettant d'assurer la précision requise.

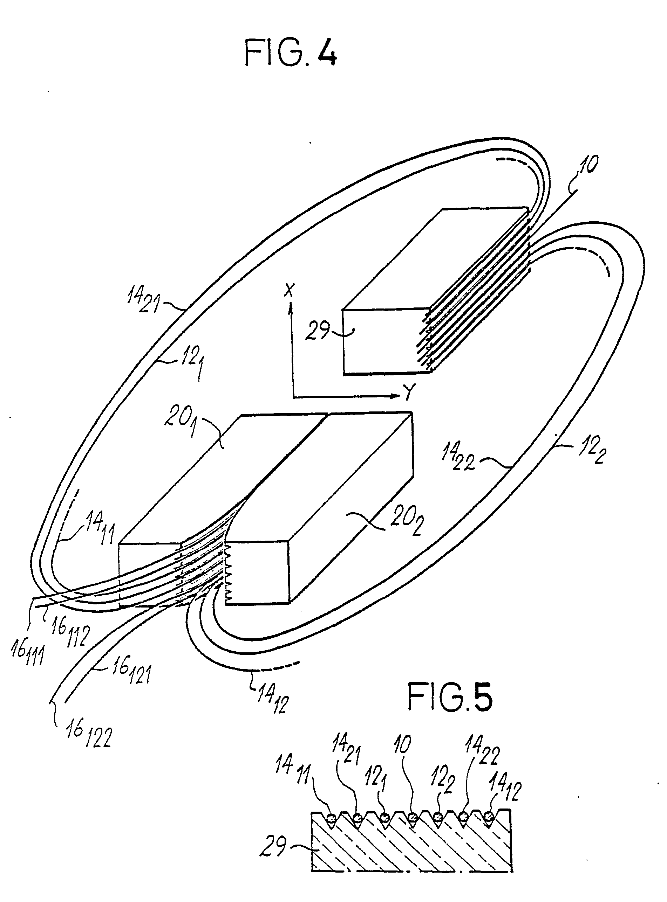

La pièce 20 est ensuite sciée suivant son plan transversal de symétrie T pour constituer deux moitiés $20_1$ et $20_2$ (Figure 3C). Cette opération peut être effectuée par tronçonnage à l'aide d'une meule scie 28. Les deux moitiés $20_1$ et $20_2$ sont ensuite mises en contact par leur partie arasée et ajustées longitudinalement l'une par rapport à l'autre par mise en butée des deux faces provenant du sciage contre un même gabarit de référence. Le rebouclage sera ensuite réalisé en utilisant une pièce auxiliaire 29 présentant également $2^n$-1 rainures, au même pas que les rainures de la pièce 20, et comportant également deux surfaces de référence, l'une perpendiculaire au plan des rainures et l'autre parallèle au plan des rainures. Les rainures peuvent être droite, comme cela est représenté sur les Figures 3D et 4. Mais, pour éviter de devoir réaliser deux moules et/ou pour garantir la coïncidence entre les rainures de la pièce 20 et de la pièce 29, on peut utiliser une pièce 29 qui, avant coupe, est identique à la pièce 20.

On commence par disposer, dans la rainure centrale de la pièce 29, une fibre amorce 10. Puis on place la fibre 29 à proximité des moitiés accolées $20_1$ et $20_2$ et on replie les tronçons de fibre sortant des moitiés $20_1$ et $20_2$ vers la pièce 29 (Fig. 4). Plusieurs dispositions sont possibles. Dans le cas schématisé sur la Figure 5, on reboucle les tronçons de fibre qui sont couplés à la fibre amorce 10 sur les rainures adjacentes à la fibre amorce 10. Ces tronçons de fibre constituent la contrepartie de celles identifiées par $12_1$ et $12_2$ sur la Figure 1. Le rebouclage peut se poursuivre comme indiqué sur la Figure 5 et, dans ce cas, les entrées $16_{11}$, $16_{121}$, $16_{211}$ et $16_{221}$ auront la disposition montrée sur la Figure 4.

Une fois les tronçons de fibre collés en place, on scie la pièce auxiliaire 29 et les tronçons de fibre perpendiculairement aux rainures. Ce sciage peut être effectué de la même façon que celui de la pièce 20, en utilisant les faces de référence pour garantir une orthogonalité du plan de sciage par rapport aux rainures. La pièce 29 est appliquée contre l'ensemble des pièces $20_1$ et $20_2$. Les moitiés $20_1$ et $20_2$ étant immobilisées, un micromanipulateur (non représenté) permettant de déplacer la pièce 29 suivant les directions X et Y est utilisé pour effectuer l'alignement. Pour cela, on recherche, à l'aide d'un appareil optique, la position qui fournit le maximum de puissance sur l'une quelconque des entrées 16 du dispositif de couplage, lorsqu'une puissance lumineuse constante est appliquée sur la sortie 10.

Les rainures ayant le même espacement sur toutes les pièces et les surfaces de référence étant parallèles si l'une des entrées 16 est en coïncidence avec l'un quelconque des tronçons portés par la pièce 29, il n'est pas nécessaire de rechercher la coïncidence sur toutes les fibres successivement.

Une fois la coïncidence obtenue, on fige le composant à l'aide d'une colle ayant un indice de réfraction adapté.

Le dispositif de couplage peut alors être encapsulé. On peut notamment utiliser pour ce faire un boîtier du genre montré en Figures 6 et 7. Le boîtier comporte un corps 30, pouvant être réalisé par assemblage et collage de plusieurs pièces, où est prévu un couloir 31 de réception des tronçons de fibre servant au rebouclage et un couloir 32 de passage des entrées et de la sortie. Un couvercle 33 est prévu pour obturer le couloir après mise en place.

A titre d'exemple, on peut maintenant donner quelques indications sur un coupleur « 8 vers 1 » pour fibres optiques multimodes ayant un diamètre de cœur de 50 microns. La pièce de base 20 présentait la constitution décrite dans le document EP-A-121 460. Les dimensions du dispositif de couplage ne dépassaient pas $150 \times 100 \times 30$ mn. Le boîtier était prévu pour que le rayon de courbure minimum imposé aux fibres ne soit pas inférieur à 3 cm. Le couloir 32 comportait des rainures de réception des fibres et était prévu pour être rempli avec un matériau de remplissage immobilisant les fibres après montage.

Les mesures effectuées sur de tels coupleurs ont fait apparaître que la perte d'insertion est inférieure à 11 dB sur toutes les entrées, avec une dispersion inférieure à + 1 dB.

Dans la pratique, il apparaît que l'invention trouve en général un optimum d'intérêt lorsque le nombre d'entrées est de huit. En dessous de ce nombre, on peut utiliser d'autres techniques. Au-delà, la difficulté d'obtenir des rainures de profondeur sensiblement constante s'accroît.

**Revendications**

1. Dispositif de couplage à fibres optiques à $2^n$ vers 1, caractérisé en ce qu'il comprend les deux moitiés $(20_1, 20_2)$ d'une pièce monobloc coupée en deux, ladite pièce étant munie de $2^n$-1 rainures convexes, identiques et parallèles réparties symétriquement par rapport à la rainure centrale dans lesquelles sont disposés des tronçons de fibre optique, la pièce monobloc étant ensuite arasée suivant un plan perpendiculaire à celui de la découpe en deux moitiés pour laisser subsister la moitié seulement de la section droite de fibre dans le plan de découpe de la pièce en deux moitiés, lesdites deux moitiés étant mises en contact suivant le plan d'arasement, les faces de découpage formant une face frontale et réalisant ainsi une restitution par apairage desdites moitiés des sections droites des fibres, et en ce qu'il comprend de plus une pièce auxiliaire (29) à $2^n$-1 rainures placée contre la face frontale des deux moitiés, lesdits tronçons étant rebouclés par engagement dans les rainures de la pièce auxiliaire vers la face frontale des moitiés de façon que le bout de chaque tronçon rebouclé soit aligné respectivement sur une desdites restitutions desdites moitiés des fibres afin de constituer $2^n$-1 couplages élémentaires 2 vers 1.

2. Dispositif de couplage selon la revendication 1, caractérisé en ce que la pièce auxiliaire (29) a la même forme que la pièce monobloc de base (20).

3. Procédé de réalisation d'un dispositif de couplage $2^n$ vers 1, caractérisé en ce qu'on réalise une pièce monobloc de base comportant $2^n$-1 rainures convexes, identiques et parallèles, réparties symétriquement par rapport à la rainure centrale ; on immobilise un tronçon de fibre dans chaque rainure de la pièce (20) ; on arase la pièce et les fibres dans un plan perpendiculaire à un plan de découpe de la pièce pour laisser subsister la moitié seulement de la section droite des tronçons de fibre dans le plan de découpe ; on coupe la pièce (20) par sciage en deux moitiés $(20_1, 20_2)$ que l'on met en contact suivant le plan d'arasement, les faces de découpage formant une face frontale et réalisant ainsi une restitution par apairage desdites moitiés des sections droites des fibres ; on réalise une pièce auxiliaire de renvoi (29) comportant également $2^n$-1 rainures au même pas que les premières ; on place une fibre amorce (10) destinée à constituer la sortie dans la rainure centrale de la pièce auxiliaire (29) ; on reboucle $2^n$-1 tronçons de fibre provenant de l'extrémité libre des moitiés pour constituer des coupleurs élémentaires 2 vers 1 en cascade ; on découpe la pièce auxiliaire et les tronçons rebouclés et on immobilise la face de découpage de la pièce auxiliaire sur ladite face frontale de telle façon que le bout de chaque tronçon rebouclé soit aligné respectivement sur une desdites restitutions desdites moitiés des fibres afin de réaliser un couplage optimum.

4. Procédé selon la revendication 3, caractérisé en ce qu'on réalise la pièce auxiliaire (29) par moulage dans un moule identique à celui servant à la réalisation de ladite pièce monobloc (20).

5. Procédé selon la revendication 3, caractérisé en ce qu'on utilise une pièce auxiliaire à rainures droites et perpendiculaires à une face de référence permettant de découper la pièce auxiliaire perpendiculairement aux tronçons de fibre.

6. Procédé selon l'une quelconque des revendications 3 à 5, caractérisé en ce qu'on encapsule le dispositif dans un boîtier comprenant des couloirs de passage des entrées, de la sortie et des tronçons de fibre de rebouclage.

**Claims**

1. A $2^n$ to 1 fiber optic coupling device, characterized in that it comprises the two halves $(20_1, 20_2)$ of a solid part separated in two halves, said part being formed with $2^n$-1 convex mutually identical and parallel grooves, distributed symmetrically with respect to the central groove, in which optical fiber lengths are located, the solid part being then cut along a plane transverse to the plane separating the part into halves for leaving one half only of the fiber cross-section in the plane along which the part is separated into two halves, said two halves being contacted along the cutting plane, the cut surfaces constituting a front surface and consequently achieving reconstruction of the cross-sections of the fibers by coupling said two halves, and in that it further comprises an auxiliary part (29) having $2^n$-1 grooves, applied against the front surface of the two halves, said lengths being looped back by engaging them into the grooves of the auxiliary part toward the front end surfaces of the halves whereby the end of each looped length is aligned with a respective one of said reconstructions in said halves of the fibers for constituting $2^n$-1 elementary 2-to-1 couplings.

2. Device according to claim 1, characterized in that the auxiliary part (29) has the same shape as the solid part (20) constituting a main part.

3. A process for making a $2^n$-to-1 coupling device, characterized by the steps of making a main solid part formed with $2^n$-1 convex mutually identical and parallel grooves, symmetrically distributed with respect to the central groove ; fixing a length of fiber in each groove of the main part (20), cutting the main part and the fibers along a plane perpendicular to a cutting plane of the part for leaving only half of the cross-section of the fiber lengths in the cutting plane ; cutting the part (20) by sawing it into two halves ($20_1$, $2_2$) which are then contacted along the cutting plane, the cutting surfaces forming a front surface and achieving reconstruction of the cross-sections of the fibers by coupling said halves ; making an auxiliary return part (29) also having $2^n$-1 grooves at the same spacing as the first grooves ; locating a start fiber (10) constituting an output into the central groove of the auxiliary part (29) ; forming loops with $2^n$-1 fiber lengths originating from the free end of the halves for constituting cascaded elementary 2-to-1 couplers ; cutting the auxiliary part and the looped lengths and fixing the cutting surface of the auxiliary part on said front surface in such a way that the end of each looped length be aligned with a respective one of said reconstructions of the fibers by said halves for obtaining optimum coupling.

4. Process according to claim 3, characterized in that the auxiliary part (29) is manufactured by molding in a mold identical to the mold used for making said solid part (20).

5. Process according to claim 3, characterized in that an auxiliary part is used having straight grooves which are perpendicular to a reference surface for making it possible to cut the auxiliary part perpendicularly to the fiber lengths.

6. Process according to any one of claims 3-5, characterized in that the device is encapsulated in a housing having passages for the inputs, the output and the looped fiber lengths.

**Patentansprüche**

1. Vorrichtung zur Kupplung optischer Fasern im Verhältnis $2^n$ zu 1, dadurch gekennzeichnet, daß sie die beiden Hälften ($20_1$, $20_2$) eines in zwei Teile geschnittenen einstückigen Blockteils (20) umfaßt, das mit $2^n$-1 identisch ausgebildeten, parallelen Nuten versehen ist, die symmetrisch zu der zentralen Nut verteilt und in denen Abschnitte optischer Fasern angeordnet sind, wobei das einstückige Blockteil anschließend in einer zu der das Blockteil in zwei Hälften teilenden Schnittebene senkrechten Ebene soweit abgetragen wurde, daß in dieser Schnittebene nur die Hälfte des Faserquerschnitte bestehen bleibt, und die beiden Hälften mit der der durch den Materialabtrag gebildeten Ebene derart in gegenseitigen Kontakt gebracht sind, daß die Schnittflächen eine Frontseite bilden und durch paarweises Zusammenfügen der halben Faserquerschnitte wieder volle Querschnitte gebildet sind, und daß die Vorrichtung außerdem ein Zusatzteil (29) mit $2^n$-1 Nuten umfaßt, das gegen die Frontseite der beiden Blockhälften gelegt ist, wobei die Faserabschnitte durch Verbindung mit den Nuten des Zusatzteils derart zu der von den beiden Blockhälften gebildete Frontseite zurückgeführt sind, daß das Ende jedes zurückgeführten Faserabschnitts mit einer der genannten durch paarweises Zusammenfügen halber Faserquerschnitte gebildeten vollen Querschnitte fluchtet, so daß $2^n$-1 elementare 2 : 1-Kupplungen gebildet sind.

2. Kupplungsvorrichtung nach Anspruch 1, dadurch gekennzeichnet, daß das Zusatzteil (29) dieselbe Form hat wie das einstückige Basisblockteil (20).

3. Verfahren zur Herstellung einer Vorrichtung zum Kuppeln von optischen Fasern im Verhältnis $2^n$ zu 1, dadurch gekennzeichnet, daß man ein einstückiges Basisblockteil (20) mit $2^n$-1 identisch ausgebildeten, parallelen konvexen Nuten herstellt, die symmetrisch zu der zentralen Nut verteilt sind, daß man in jeder Nut des Blockteils (20) einen Faserabschnitt festlegt, daß man das Blockteil (20) und die Fasern in einer zu einer Schnittebene des Blockteils (20) senkrechten Ebene durch Materialabtrag soweit abträgt, bis in der genannten Schnittebene nur noch der halbe Querschnitt der Faserabschnitte vorhanden ist, daß man das Blockteil (20) durch Sägen in zwei Hälften ($20_1$, $20_2$) schneidet und diese Hälften mit den durch den Materialabtrag gebildeten ebenen Flächen so miteinander in Kontakt bringt, daß die Schnittflächen eine Frontseite bilden und durch paarweises Zusammenfügen der Querschnittshälften der Fasern wieder volle Querschnitte entstehen, daß man ein Zusatzteil (29) für den Faserrücklauf herstellt, das ebenfalls $2^n$-1 Nuten besitzt, die denselben Teilungsabstand haben wie die erstgenannten Nuten, daß man in der zentralen Nut des Zusatzteils (29) eine Anfangsfaser anbringt, die den Ausgang der Kupplungsvorrichtung bilden soll, daß man $2^n$-1 der aus den freien Enden der Hälften des Basisblockteils austretenden Faserabschnitte rückführt, um in Kaskade angeordnete elementare 2 : 1-Kupplungen zu bilden, daß man das Zusatzteil (29) und die rückgeführten Faserabschnitte abschneidet und daß man die Schnittfläche des Zusatzteils an der genannten Frontseite so festlegt, daß das Ende jedes rückgeführten Faserabschnitts mit jeweils einem der genannten durch paarweises Zusammenfügen halber Faserquerschnitte gebildeten vollen Querschnitte fluchtet, um eine optimale Kopplung zu erreichen.

4. Verfahren nach Anspruch 3, dadurch gekennzeichnet, daß man die Zusatzteil (29) durch Gießen in einer Form herstellt, die mit der Form identisch ist, die zur Herstellung des einstückigen Blockteils (20) verwendet wird.

5. Verfahren nach Anspruch 3, dadurch gekennzeichnet, daß man ein Zusatzteil (29) mit geradlinigen Nuten verwendet, die senkrecht zu einer Bezugsfläche verlaufen, die ein Durchtrennen des Zusatzteils senkrecht zu den Faserabschnitten ermöglicht.

6. Verfahren nach einer Ansprüche 3 bis 5, dadurch gekennzeichnet, daß man die Vorrichtung in einer Dose verkapselt, die Durchgänge für die Eingänge, den Ausgang und die rückgeführten Faserabschnitte aufweist.

# FIG.1

# FIG. 2

FIG. 3A

FIG. 3B

FIG. 3C

FIG. 3D

FIG. 6

FIG. 7

# FIG. 4

# FIG.5